# EUROPEAN PATENT SPECIFICATION

(11) **EP 0 901 915 B1**
(45) Date of publication and mention of the grant of the patent: **21.04.2004**
(21) Application number: 98203021.5
(22) Date of filing: 10.09.1998
(51) Int. Cl.: B60C 19/12, B60C 9/18, B60C 17/00

(54) **Tyre**
Reifen
Bandage pneumatique

(30) Priority: 11.09.1997 NL 1007014; 25.11.1997 NL 1007609
(43) Date of publication of application: 17.03.1999
(73) Proprietor: Hunneman Import B.V., NL-8483 JK Scherpenzeel (NL); Samson Rubber Industries (PVT) Ltd., Mahara Kadawatha (LK)
(72) Inventor: Hunneman, Jan, 8483 JK Scherpenzeel (NL); Rajapaksa, Ranatunga, Mahara Kadawatha (LK)
(74) Representative: 't Jong, Bastiaan Jacob

(56) References cited:
- EP-A- 0 441 552
- WO-A-92/12866
- BE-A- 508 971
- DE-C- 108 642
- FR-A- 483 508
- GB-A- 1 586 745
- US-A- 1 414 328
- US-A- 4 109 695
- US-A- 5 010 937

## Description

The present invention relates to pneumatic tyres for vehicles in general and cycles in particular, comprising only the features of the pre-characterising portion of claim 1.

In the context of economy in material and the cost-saving associated herewith, it has become usual to make a tyre element, to be used with or without inner tube, increasingly thinner. Known from EP-A-0441552 is a tyre of the above described type wherein the buffer layer serves only to receive the objects in order to increase the tyre resistance to puncturing. The buffer layer of the known art serves purely and simply to increase the distance between an air chamber in the interior of the tyre and the outside, which buffer layer is manufactured for this purpose from sponge-like rubber with a number of different possible compositions.

A drawback of the known art is that the travel characteristics of the tyre are considerably worsened relative to a tyre without buffer layer, in particular even relative to a tyre without buffer layer and with an old-fashioned, thick tyre element. The adversely affected travel characteristics relate particularly to the rolling resistance of the tyre, which is high in the known art, as a result of air displacements in the rubber of the buffer layer, which has an adverse effect on the travel characteristics. When the rolling resistance is high, the travel comfort is therefore low. Wear is moreover enhanced hereby.

It is noted here, that from US-A-5,010,937 a tyre is known, in which a metal or plastic layer is incorporated therein to enhance stiffness, both circumferentially and transversely.

Further, from US 1,414,328 a tyre is known with a layer of semi-hard rubber to turn aside sharp objects, which would otherwise penetrate the tyre.

The invention has for its object to provide an improved tyre, which is achieved or realised in a tyre having also the features of the characterising portion of the appended claim 1.

With a tyre according to the present invention a rolling resistance, and therefore a travel comfort, is obtained which at least approximates that of an old-fashioned tyre with a tyre element without buffer layer. A tyre according to the present invention moreover still has a degree of elasticity such that unevenness in the road surface can be surmounted in comfortable manner and shocks resulting therefrom are damped by this elasticity.

Sponge-like rubber as known for the buffer layer of the above mentioned European patent application 0.441.552 moreover has the tendency to tear as a result of the cell structure thereof when a relatively large object penetrates the tyre and particularly when this tyre-penetrating object turns, rotates or tilts, for instance under the influence of contact with the road surface on which the vehicle with the tyre thereon is travelling. It is otherwise noted that the use of rubber with closed cells is known from diverse other prior art. It is noted in respect hereof that, once an object which has penetrated into the buffer layer has damaged the closed cells of the rubber, a weak spot is hereby formed in the tyre. It is precisely this which is detrimental to the travel comfort. The larger the cells the rubber material contains, the greater the influence hereof.

In an embodiment of the present invention a tyre has the property that the material of the buffer layer has a high resistance to point load and a resistance to surface pressure corresponding with that of an inflated tyre without buffer layer. Penetration of sharp objects is hereby prevented, while the known art relies solely on a sharp object being received and held in the buffer layer. With a sufficiently high resistance to point load an object will only be able to penetrate to a very limited extent into the buffer layer and, under the influence of the pressure prevailing in the pressure chamber and the rolling of the tyre over a road surface, the object will even be pressed out of the tyre again. So-called "flexigum" can herein be applied, as will be further described hereinbelow.

In another embodiment a tyre according to the present invention has the property that the buffer layer is enclosed between the tyre element and a reinforcing cord layer with a cohesive structure of fibres or threads, whereby the strength of the tyre is improved in advantageous manner. An additional reinforcing cord layer is preferably arranged between the buffer layer and the tyre element, wherein the buffer layer is then enclosed between the reinforcing cord layer and the additional reinforcing cord layer, which results in a further improvement in the strength of the tyre. A tyre in the present embodiment more preferably has the property that the cord layer and the additional cord layer are formed integrally. The manufacture of a tyre according to the invention is hereby simplified considerably, wherein the cord layer and the additional cord layer are preferably trained round bead wires of the tyre with the material of the buffer layer therebetween, so that both convenience of manufacture and strength of the tyre are optimized.

In a further embodiment the tyre according to the present invention is provided with a breaker layer as described in the dependent claims 8 and 9. A final barrier is hereby erected against penetration of sharp objects and the resistance to puncturing of the tyre according to the invention is increased.

In yet another embodiment, a tyre according to the present invention has the property that the buffer layer has a density or toughness varying toward the interior of the tyre. The resistance to penetration of sharp objects into the tyre, whether or not this be provided with a breaker layer, is further improved as a result of the profile of the density or toughness of the buffer layer in radial direction. This tyre preferably has the property that the buffer layers have a density or toughness increasing toward the interior of the tyre. Thus is achieved that the further a sharp object penetrates into the buffer layer, the greater the resistance of the buffer layer to further penetration therein becomes. In a specific embodiment, a tyre in the present embodiment with a buffer layer has the property that close to the breaker layer the buffer layer has a toughness or hardness approximating that of the breaker layer, wherein a gradual variation is brought about in the profile of the toughness or the hardness of the buffer layer from the breaker layer, this being favourable for both the rolling resistance and the resistance to penetration of sharp objects.

The invention will be further elucidated hereinbelow with reference to embodiments thereof. In the drawing:
fig. 1 shows a view in cross-section of a tyre according to the present invention;
fig. 2 shows a graph with hardness plotted against distance therein;
fig. 3 is a graph corresponding with fig. 2 showing therein a different variation of the hardness profile according to the present invention;
fig. 4 is a graph likewise corresponding with fig. 2 showing yet another variation of the hardness in a tyre according to the present invention;
fig. 5 shows a graph once again corresponding with fig. 2 of yet another variation of the hardness in a tyre according to the present invention; and
fig. 6 shows a view in cross-section of an embodiment of a tyre according to the present invention differing from that of fig. 1.

Corresponding components are designated in the figures with the same reference numerals.

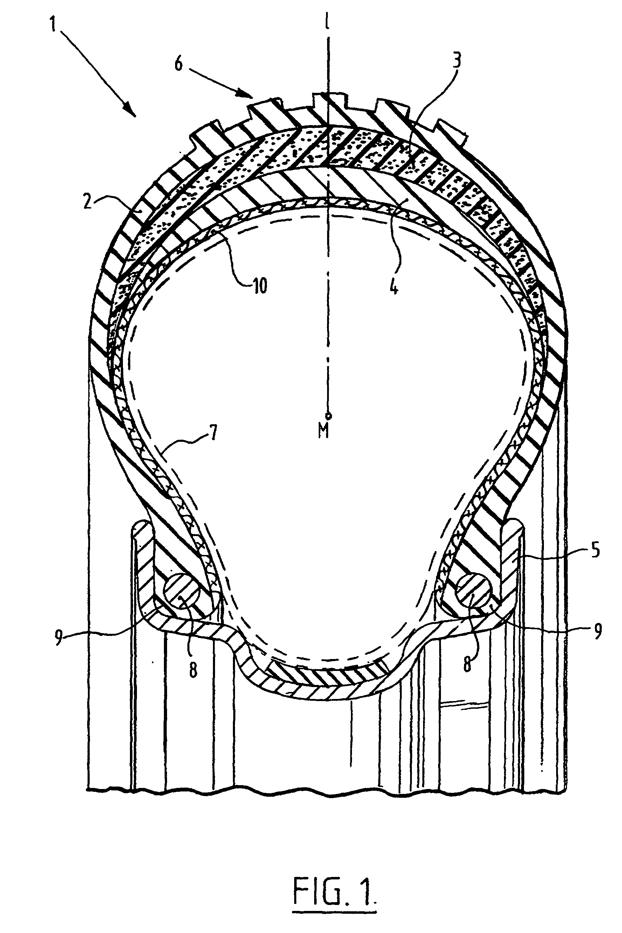

Fig. 1 shows a tyre 1 in assembled situation with a wheel rim 5. The tyre element is formed from a layer of rubber 2 or other similar material which is provided with a tread on running surface 6.

The tyre 1 according to the present invention further comprises on the inner surface of layer 2 a covering layer 3 designed as buffer layer and formed here from a layer of rubber material. Covering layer 3 gives tyre 1 a stiffness which ensures a rolling resistance which corresponds with a high degree of travel comfort such as provided by a tyre under pressure without buffer layer, and an elasticity which optimizes shock-damping. The dimensions can be such that a thickness of 2 mm of layer 2, 10 mm of covering layer 3 and 1 mm of breaker layer 4 under a pressure of about 5 bar in the interior of the tyre results in a compression of approximately 3 mm along the line 1 under the influence of a load of about 50 kg along the same line 1 in fig. 1. A breaker layer 4 of stiff and form-retaining material is arranged on the inner surface of the thus formed covering layer 3. The assembly of covering layer 3 and breaker layer 4 is enclosed between layer 2 of rubber and a cord layer 10.

The rubber of the covering layer 3 consists for instance of a mixture of natural and synthetic polymers mixed with carbon black, to which are added rubber processing oil, ZnO, fatty acids, anti-degradants and vulcanizing agents. Such material has a hardness of for instance 30-35 shore A for use in a normal cycle, wherein it is noted that this hardness can have a different value for another application. A greater hardness may thus be desirable for a tyre of a racing cycle or of a car. The hardness of the material is chosen for a particular application (cycle, car etc.) so as to be equal to the hardness of a usual tyre for this application without buffer layer at a pressure prevailing in the pressure chamber which is usual for the application. The same applies for the tensile strength of the material, which in the application for a cycle amounts for instance to 14-16 Mpa, wherein the elongation at break amounts for instance to 650-750%. The material described here for use in a cycle tyre has a high resistance to point load such that for instance a drawing pin, a glass splinter or the like cannot be pressed therein, or only to a very limited extent. Use of this material in a tyre results in minimizing of the penetration of objects therein. In the unlikely event an object should penetrate, it is pushed out again. This is the result of the deforming of the tyre as the contact surface approaches and leaves the road surface. The sharp object which has penetrated slightly into the buffer layer is herein simply pushed out.

The above described material otherwise has properties relating to elasticity which correspond with those of the material of a high-bouncing ball and is known as flexigum. The reaction of the tyre to unevenness in the road such as bumps is hereby wholly determined by the properties of the air chamber and the tyre element optionally supplemented with the buffer layer.

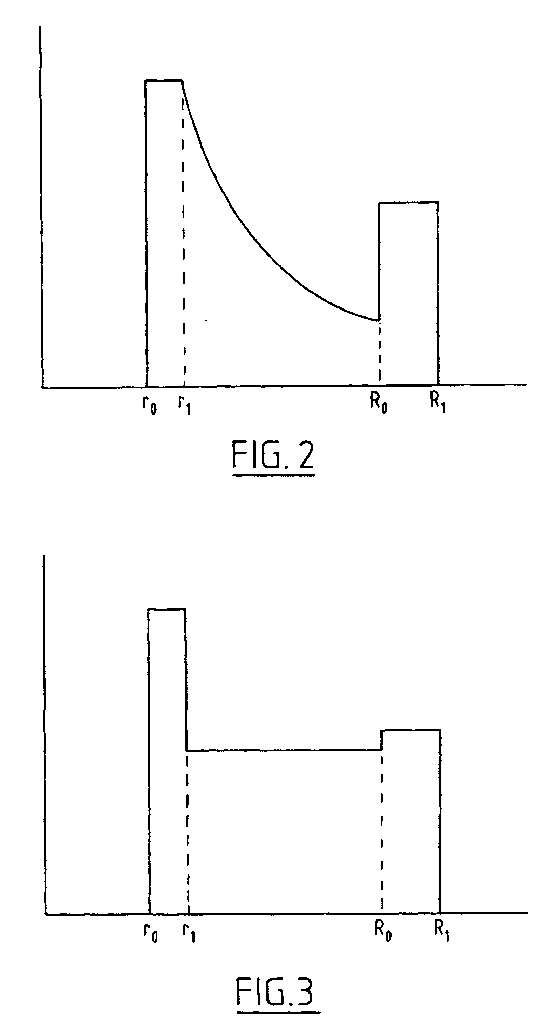

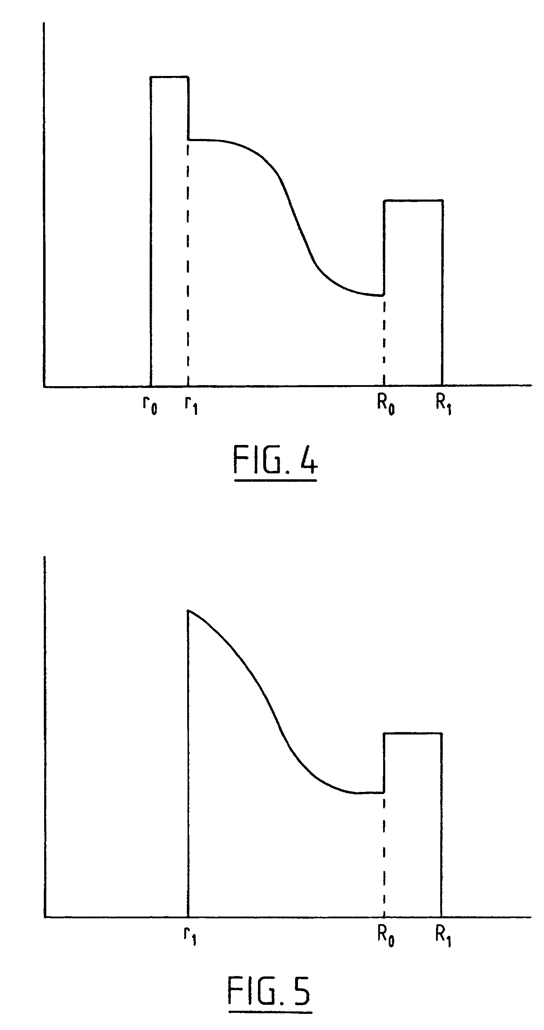

In figures 2-5 graphs of the hardness are plotted against the distance from the centre M of tyre 1 according to the present invention along the line 1. Figures 2, 3 and 4 herein show graphs for tyres according to the present invention in which a breaker layer 4 is arranged, wherein figure 5 shows a graph which substantially corresponds with figure 4 but which relates to a tyre without breaker layer.

In each of the figures 2-5 r₁ designates the distance from centre M to the boundary surface of covering layer 3 which faces towards it, and R₀ designates the distance along the line l between centre M and the boundary surface of the layer 2 of tyre material facing towards it. In addition, R₁ designates the distance between the centre M and the external boundary surface or running surface 6 remote therefrom of the layer 2 of tyre material. In figures 2, 3 and 4 r₀ designates the distance between centre M and the boundary surface facing towards it of breaker layer 4.

In the embodiment shown in fig. 1 an inner tube 7 is provided, although this is not strictly necessary and the invention is equally applicable to tyres without inner tube. The covering layer 3 can further be manufactured from materials other than rubber material. Gel can for instance be used as covering layer 3 owing to the inherent properties thereof, which can be particularly useful in manufacture of the tyre according to the present invention, such as control of properties such as hardness, elasticity and stiffness in the application of the gel. This then also relates to its capacity to adhere to the inner surface of the layer of tyre material 2, particularly when cord layer 10 is arranged on the inside of the layer 2 of rubber, since covering layer 3 adheres markedly better to layer 2 of for instance rubber than to cord layer 10, and the ability to control the process of foaming of the foam material, etc.

Both covering layer 3 and breaker layer 4 can also extend to a greater or lesser extent than is shown here in radial direction along the inner surface of the layer of tyre material 2. The covering layer 3 in particular can for instance extend up to the bead wires 8 arranged in the beads 9 of tyre 1. An optimal protection of the side walls, which do not form part of running surface 6, is hereby also provided.

The rubber material is chosen such that the deformability of the tyre is not impeded thereby, i.e. neither compression of tyre 1 under the influence of weight nor lateral deformation relative to rim 5 for tyre 1, for instance while negotiating a bend, are reduced or even obstructed by covering layer 3, when compared with the same properties of a tyre without covering layer.

Owing to the resistance of the covering layer to point load, an object will only penetrate the buffer layer to a very limited extent and, under the influence of the pressure prevailing in the pressure chamber and rolling of the tyre over a road surface, the object will even be pressed out of the tyre again. So-called "flexigum" is used herein.

Use can also be made of a covering layer 3 which is compressed under the influence of the pressure prevailing in the interior of tyre 1 or in inner tube 7, whereby the intended resistance to (sharp) objects from outside can be brought about or improved further.

Covering layer 3 functions according to the invention as a blocking which keeps out sharp objects from outside so that they do not reach the inner tube. In the case of a tyre without inner tube, it is hereby possible to prevent in effective manner an open connection between the interior of tyre 1 and the outside environment being caused by penetrating sharp objects. Penetrating sharp objects not having large dimensions will certainly become stuck in the covering layer and will not even reach the interior of tyre 1. If however these are penetrating sharp objects of relatively large dimensions, they can penetrate covering layer 3 and will come to a stop in the inward lying part of covering layer 3. Breaker layer 4 herein forms an ultimate security against penetrating objects which are so sharp and long that covering layer 3 insufficiently slows down penetration thereof.

In the case of a covering layer 3 according to the present invention with a very high density on the side directed toward the centre M of tyre 1, such a breaker layer is not necessary. The covering layer can herein be seen as a layer in which the relevant breaker layer is incorporated in integral form.

Fig. 2 shows a graph of the density of tyre 1 of fig. 1, i.e. the resistance to penetrating sharp objects plotted against the distance from the centre M along line 1 in fig. 1. Breaker layer 4 corresponds with the area between the distances r₀ and r₁, wherein covering layer 3 corresponds with the area between the distances r₁ and R₀ and wherein the layer of tyre material 2 corresponds with the area between the distances R₀ and R₁. It is found that the density, and therefore the resistance to point load of covering layer 3 decreases in the area between the distances r₁ and R₀ from the hardness of breaker layer 4 to a value which amounts to a part of the hardness or resistance of the layer of tyre material 2 in the proximity thereof. In this manner the deformability of the final tyre 1 is ensured and penetrating sharp objects are subject to progressively more resistance to penetration thereof in inward direction of the tyre 1.

Fig. 3 shows a similar type of graph for a tyre as alternative embodiment of the present invention, wherein covering layer 3 has a constant density, and therefore resistance to point load, between the distances r₁ and R₀.

Fig. 4 shows a graph for yet another tyre as embodiment of the present invention, wherein in the first instance the hardness and therefore resistance of covering layer 3 gradually decreases from the distance r₁, where it adjoins breaker layer 4, in the direction of the distance R₀ and, prior to reaching this distance, shows an acceleration in the reduction of hardness which finally levels off again to a gradual rate just before reaching the distance R₀. The layer of tyre material between R₀ and R₁ and the breaker layer between the distances r₀ and r₁ both display a greater hardness and therefore resistance to penetrating sharp objects than the respective parts of the covering layer adjacent thereto.

Fig. 5 shows a graph corresponding to fig. 4 wherein however the additional embodiment of a tyre according to the present invention corresponding therewith contains no breaker layer.

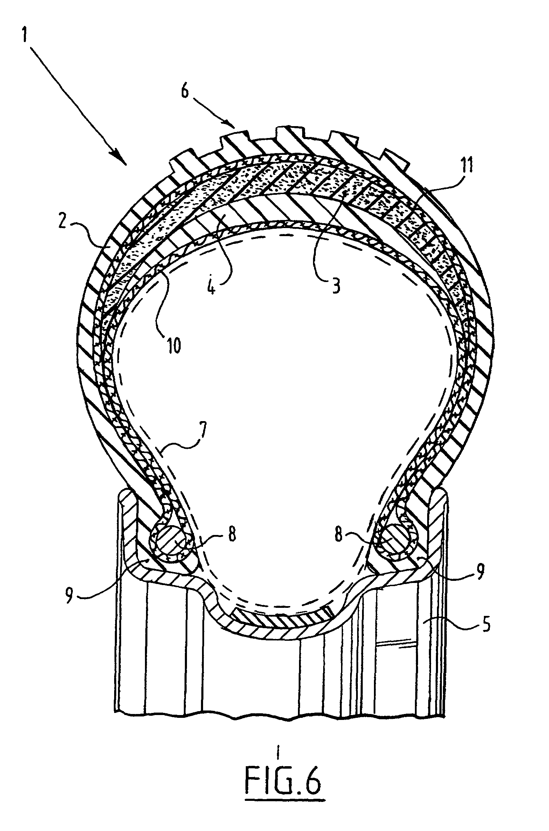

Fig. 6 shows a view corresponding with fig. 1 of an alternative embodiment of a tyre 12 according to the present invention. The tyre 12 shown here differs from tyre 1 shown in fig. 1 only in respect of an additional cord layer 11 between layer 2 and covering layer 3. Brief reference is therefore made to the description of fig. 1 for the general configuration of the tyre. The additional cord layer 11 forms a unit with cord layer 10 and this unit is trained round the bead wires 8 as a pre-operation during production, wherein the material for covering layer 3 and for breaker layer 4 is arranged between cord layer 10 and additional cord layer 11. During production a vulcanizing process is for instance then performed, whereby the separate components of the tyre are assembled.

In alternative embodiments of the present invention, the covering layer, which is described here as being manufactured from rubber material but which can be manufactured from other materials within the scope of the present invention, can have a profile of the variation of the hardness and therefore a resistance differing from those shown here. In particular, the hardness of covering layer 3 can be greater than that of breaker layer 4 or of the layer of tyre material 2 in the proximity thereof. Random other profiles of the variation of the hardness of the covering layer also lie within the scope of the present invention, as long as the penetration of sharp objects is prevented thereby, and particularly when the hardness or resistance to penetration by these objects still increases in the direction of the interior of tyre 1.

## Claims

1. Tyre (1) for a vehicle wheel, such as a cycle wheel, comprising: a tyre element (2) of wear-resistant rubber material, which contains a running surface (6) and has tread on the outside; and a buffer layer (3) fixed to the inner surface of the tyre element for objects penetrating the tyre, wherein the tyre element and the buffer layer at least partially enclose a pressure chamber,
**characterized in that**
the buffer layer is manufactured from an elastic material with a high resistance to point loads, which has small closed cells or is solid, wherein the tyre has a stiffness, which stiffness is associated with a low rolling resistance and which is at least approximately equal to that of a tyre without buffer layer under pressure from the pressure chamber, whereby sharp objects, after penetrating into the buffer layer, are pushed out from the tyre upon local deformation of the tyre at a contact surface thereof on the road surface.

2. Tyre as claimed in claim 1, **characterized in that** the material has an elasticity which corresponds with a high degree of shock-damping and which is at least approximately equal to that of a tyre without buffer layer under pressure from the pressure chamber.

3. Tyre as claimed in claim 1 or 2, **characterized in that** the material of the buffer layer (3) has a resistance to surface pressure corresponding with that of an inflated tyre without buffer layer.

4. Tyre as claimed in claim 1, 2 or 3, **characterized in that** the material is a rubber with a specific weight equal at most to that of water.

5. Tyre as claimed in any of the foregoing claims, **characterized in that** the buffer layer (3) is enclosed between the tyre element and a reinforcing cord layer (10) with a cohesive structure of fibres or threads.

6. Tyre as claimed in claim 5, **characterized in that** an additional reinforcing cord layer is arranged between the buffer layer and the tyre element.

7. Tyre as claimed in claims 5 and 6, **characterized in that** the cord layer (10) and the additional cord layer are formed integrally.

8. Tyre as claimed in claim 6 or 7, **characterized in that** the cord layer (10) and the additional cord layer are trained round bead wires of the tyre with the material of the buffer layer there between.

9. Tyre as claimed in any of the foregoing claims, **characterized by** a breaker layer (4) on the side of the buffer layer located opposite the tyre element.

10. Tyre as claimed in claim 9, **characterized in that** the breaker layer (4) at least partially extends directly over the inner surface of the buffer layer.

11. Tyre as claimed in any of the foregoing claims, **characterized in that** the buffer layer (3) has a density or toughness varying toward the interior of the tyre.

12. Tyre as claimed in claim 11, **characterized in that** the buffer layer (3) has a density or toughness increasing toward the interior of the tyre.

13. Tyre as claimed in claim 11 or 12 and claim 9 or 10, **characterized in that** close to the breaker layer (4) the buffer layer (3) has a toughness or hardness approximating that of the breaker layer (4).

14. Tyre as claimed in claim 3, wherein the material is flexigum.

15. Tyre as claimed in claim 3, wherein the material is that of a high-bouncing ball.

16. Tyre as claimed in any of the foregoing claims, wherein the material of the buffer layer (3) has a hardness of 30-35 shore A, a tensile strength of 14-16 Mpa and displays elongation at break of 650-750%.

## Patentansprüche

1. Reifen (1) für ein Fahrzeugrad, wie z.B. ein Fahrradrad, umfassend: ein Reifenelement (2) aus abriebfestem Gummimaterial, welches eine Lauffläche (6) enthält und ein Profil an der Außenseite aufweist; und eine an der Innenfläche des Reifenelements befestigte Pufferschicht (3) für in den Reifen eindringende Gegenstände, wobei das Reifenelement und die Pufferschicht mindestens teilweise eine Druckkammer umschließen,
**dadurch gekennzeichnet, dass**
die Pufferschicht aus einem elastischen Material mit hohem Widerstand gegen Punktbelastungen hergestellt ist, das kleine geschlossene Zellen aufweist oder massiv ist, wobei der Reifen eine Steifigkeit aufweist, die mit einem niedrigen Rollwiderstand verknüpft ist und die mindestens annähernd gleich derjenigen eines Reifens ohne Pufferschicht unter Druck aus der Druckkammer ist, wodurch scharfe Gegenstände nach dem Eindringen in die Pufferschicht aus dem Reifen hinausgedrückt werden, infolge örtlicher Verformung des Reifens an dessen Auflagefläche an der Straßenoberfläche.

2. Reifen nach Anspruch 1, **dadurch gekennzeichnet, dass** das Material eine Elastizität hat, die einem hohen Grad von Stoßdämpfung entspricht und die mindestens annähernd gleich ist der eines Reifens ohne Pufferschicht unter dem Druck von der Druckkammer.

3. Reifen nach Anspruch 1 oder 2, **dadurch gekennzeichnet, dass** das Material der Pufferschicht (3) einen Widerstand gegen Flächendruck aufweist, der dem eines aufgeblasenen Reifens ohne Pufferschicht entspricht.

4. Reifen nach Anspruch 1, 2 oder 3, **dadurch gekennzeichnet, dass** das Material ein Gummi mit einem spezifischen Gewicht ist, das höchstens gleich dem von Wasser ist.

5. Reifen nach einem der vorangehenden Ansprüche,
**dadurch gekennzeichnet, dass** die Pufferschicht (3) eingeschlossen ist zwischen dem Reifenelement und einer Verstärkungs-Kordschicht (10) mit einer zusammenhängenden Struktur von Fasern oder Fäden.

6. Reifen nach Anspruch 5, **dadurch gekennzeichnet, dass** eine zusätzliche Verstärkungs-Kordschicht zwischen der Pufferschicht und dem Reifenelement angeordnet ist.

7. Reifen nach Anspruch 5 und 6, **dadurch gekennzeichnet, dass** die Kordschicht (10) und die zusätzliche Kordschicht integral ausgebildet sind.

8. Reifen nach Anspruch 6 oder 7, **dadurch gekennzeichnet, dass** die Kordschicht (10) und die zusätzliche Kordschicht um die Wulstseile des Reifens herumgezogen sind, wobei das Material der Pufferschicht dazwischen angeordnet ist.

9. Reifen nach einem der vorangehenden Ansprüche, **gekennzeichnet durch** eine Verstärkerschicht (4) auf der vom Reifenelement abgewandten Seite der Pufferschicht.

10. Reifen nach Anspruch 9, **dadurch gekennzeichnet, dass** die Verstärkungsschicht (4) sich mindestens teilweise direkt über die Innenfläche der Pufferschicht erstreckt.

11. Reifen nach einem der vorangehenden Ansprüche,
**dadurch gekennzeichnet, dass** die Pufferschicht (3) eine zum Inneren des Reifens hin variierende Dichte oder Zähigkeit aufweist.

12. Reifen nach Anspruch 12, **dadurch gekennzeichnet, dass** die Pufferschicht (3) eine zum Inneren des Reifens hin zunehmende Dichte oder Zähigkeit aufweist.

13. Reifen nach Anspruch 11 oder 12 und Anspruch 9 oder 10,
**dadurch gekennzeichnet, dass** die Pufferschicht (3) in der Nähe der Verstärkungsschicht (4) eine Zähigkeit oder Härte aufweist, die derjenigen der Verstärkungsschicht (4) nahekommt.

14. Reifen nach Anspruch 3, bei dem das Material Flexigum ist.

15. Reifen nach Anspruch 3, bei dem das Material dasjenige eines hoch zurückspringenden Balles ist.

16. Reifen nach einem der vorangehenden Ansprüche, bei dem das Material der Pufferschicht (3) eine Härte von 30-35 Shore A, eine Zugfestigkeit von 14-16 Mpa und eine Bruchdehnung von 650-750% aufweist.

## Revendications

1. Pneumatique (1) pour une roue de véhicule, telle qu'une roue de cycle, comprenant : un élément de pneumatique (2) en caoutchouc résistant à l'usure, qui comporte une surface de roulement (6) et qui comporte une bande de roulement sur l'extérieur ; et une couche tampon (3) fixée à la surface intérieure de l'élément de pneumatique pour des objets pénétrant dans le pneumatique, dans lequel l'élément de pneumatique et la couche tampon enferment au moins partiellement une chambre de pression,
**caractérisé en ce que**
la couche tampon est fabriquée en un matériau élastique ayant une résistance élevée à des charges ponctuelles, qui comporte de petites cellules fermées ou qui est solide, dans lequel le pneumatique a une certaine rigidité, laquelle rigidité est associée à une faible résistance au roulement et qui est au moins approximativement égale à celle d'un pneumatique sans couche tampon sous la pression de la chambre de pression, moyennant quoi les objets pointus, après pénétration dans la couche tampon, sont repoussés hors du pneumatique lors d'une déformation locale du pneumatique au niveau d'une surface de contact de celui-ci avec le revêtement routier.

2. Pneumatique selon la revendication 1, **caractérisé en ce que** le matériau a une élasticité qui correspond à un degré élevé d'amortissement des chocs et qui est au moins approximativement égale à celle d'un pneumatique sans couche tampon sous la pression de la chambre de pression.

3. Pneumatique selon la revendication 1 ou 2, **caractérisé en ce que** le matériau de la couche tampon (3) a une résistance à une pression superficielle correspondant à celle d'un pneumatique gonflé sans couche tampon.

4. Pneumatique selon la revendication 1, 2 ou 3, **caractérisé en ce que** le matériau est un caoutchouc avec une densité égale au plus à celle de l'eau.

5. Pneumatique selon l'une quelconque des revendications précédentes, **caractérisé en ce que** la couche tampon (3) est enfermée entre l'élément de pneumatique et une couche de fil câblé de renforcement (10) avec une structure cohésive de fibres ou de fils.

6. Pneumatique selon la revendication 5, **caractérisé en ce qu'**une couche de fil câblé de renforcement supplémentaire est agencée entre la couche tampon et l'élément de pneumatique.

7. Pneumatique selon les revendications 5 et 6, **caractérisé en ce que** la couche de fil câblé (10) et la couche de fil câblé supplémentaire sont formées d'un seul tenant.

8. Pneumatique selon la revendication 6 ou 7, **caractérisé en ce que** la couche de fil câblé (10) et la couche de fil câblé supplémentaire sont enroulées autour des tringles du pneumatique en plaçant le matériau de la couche tampon entre elles.

9. Pneumatique selon l'une quelconque des revendications précédentes, **caractérisé par** un couche de rupture (4) du côté de la couche tampon situé à l'opposé de l'élément de pneumatique.

10. Pneumatique selon la revendication 9, **caractérisé en ce que** la couche de rupture (4) s'étend au moins partiellement directement sur la surface intérieure de la couche tampon.

11. Pneumatique selon l'une quelconque des revendications précédentes, **caractérisé en ce que** la couche tampon (3) a une densité ou une solidité variant vers l'intérieur du pneumatique.

12. Pneumatique selon la revendication 11, **caractérisé en ce que** la couche tampon (3) a une densité ou une solidité augmentant vers l'intérieur du pneumatique.

13. Pneumatique selon la revendication 11 ou 12 et selon la revendication 9 ou 10, **caractérisé en ce que**, à proximité de la couche de rupture (4), la couche tampon (3) a une solidité ou une dureté voisine de celle de la couche de rupture (4).

14. Pneumatique selon la revendication 3, dans lequel le matériau est du flexigum.

15. Pneumatique selon la revendication 3, dans lequel le matériau est celui d'une balle à haut rebond.

16. Pneumatique selon l'une quelconque des revendications précédentes, dans lequel le matériau de la couche tampon (3) a une dureté de 30 à 35 Shore A, une résistance à la tension de 14 à 16 Mpa et présente un allongement à la rupture de 650 à 750 %.
